# EUROPÄISCHE PATENTANMELDUNG

(11) **EP 0 923 879 A2**
(43) Veröffentlichungstag der Anmeldung: **23.06.1999**
(21) Anmeldenummer: 98121051.1
(22) Anmeldetag: 06.11.1998
(51) Int. Cl.: A23L 1/29, A23L 3/36, A23L 3/22

(54) **Verfahren und Vorrichtung zur Kühlung dickflüssiger Sossen mit stückigen Einlagen**

(30) Priorität: 20.12.1997 DE 19757134
(71) Anmelder: A. STEPHAN U. SÖHNE GMBH & CO., D-31789 Hameln (DE)
(72) Erfinder: Köllner, Friedrich, 31840 Hess. Oldendorf (DE)
(74) Vertreter: Gramm, Werner, Prof. Dipl.-Ing.

(57) **Zusammenfassung**

Die Erfindung betrifft ein Verfahren sowie eine Vorrichtung zur Kühlung dickflüssiger Soßen mit stückigen Einlagen. Zur Entwicklung eines quasi koninuierlichen Verfahrens unter größtmöglicher Schonung der stückigen Einlagen werden erfindungsgemäß folgende Verfahrensschritte vorgeschlagen:
a) die mit einer Temperatur von 75° bis 120° C hergestellte Soße wird über ein Kühlsystem gepumpt und hierbei auf eine Temperatur von ca. 50° bis 55° C gekühlt;
b) die so vorgekühlte Soße wird in einen unter Vakuum gesetzten Kühlbehälter gepumpt, den sie unter Schwerkraft teilweise über erzwungene Umlenkungen und teilweise im freien Fall durchläuft, wobei die Soße durch Verdampfen von Wasser auf eine Temperatur von ca. 3° C bis 17° C gekühlt wird;
c) die sich auf dem Behälterboden ansammelnde gekühlte Soße wird chargenweise alle 5 bis 10 Minuten in einen vorevakuierten Schleusentank abgelassen;
d) der Schleusentank wird dann mit Sterilluft beaufschlagt und unter ca. 1 bar Überdruck gesetzt, der die Soße in den Ansaugbereich einer Pumpe drückt, die die Soße zu ihrer weiteren Verarbeitung pumpt.

## Beschreibung

Die Erfindung betrifft ein Verfahren sowie eine Vorrichtung zur Kühlung dickflüssiger Soßen mit stückigen Einlagen.

Es ist bekannt, dünnflüssige Lebensmittel mittels Vakuum-Brüdenverdampfung zu kühlen. Dieses Verfahren läßt sich jedoch für dickflüssige Lebensmittel nur in beschränktem Umfang einsetzen, da einerseits häufig nicht die für die Vakuumkühlung notwendige dünne Verdampfungsschicht erreicht und andererseits die stückigen Einlagen durch mechanische Verfahren beschädigt und dadurch die Gesamtqualität gemindert werden.

Dickflüssige Soßen mit stückigen Einlagen wie z. B. Gemüse, Obst oder Fleisch werden bisher durch manuelles Abfüllen der ca. 80° C heißen Soße in Plastikkästen mit einem Fassungsvermögen von ca. 10 kg entleert. Diese Plastikkästen werden dann in einem Kühlraum bei einer Temperatur von +3° C ca. 48 Stunden gekühlt. Dabei stellen Abfüllen, Kühlen, Entleeren und Reinigen der Kästen einen erheblichen Arbeitsaufwand dar.

Kontinuierlich arbeitende Anlagen wie Kratzkühler (flüssigkeitsgekühlte Rohre mit mechanischen, innenliegenden Abstreifeinrichtungen) haben sich für Soßen mit stückigen Einlagen nicht bewährt, da sich durch die starke mechanische Bearbeitung je nach verwendeter stückiger Einlage am Ende nur ein uniformer Brei ergibt, der nicht den Kundenwünschen entspricht.

Eine Kühlung über Röhrenkühlsysteme scheidet ebenfalls aus, da durch die gewünschte niedrige Temperatur von +3° C und die notwendige hohe Viskosität der Soßen von bis zu 22 Pas ein Einfrieren des Röhrenkühlers erfolgt. Zudem tritt auch eine Schädigung der stückigen Einlagen durch die bei der Kühlung von hochviskosen Soßen in Röhrensystemen notwendigen hohen Pumpendrücke ein.

Der Erfindung liegt die Aufgabe zugrunde, ein Verfahren sowie eine Vorrichtung zur Kühlung dickflüssiger Soßen mit stückigen Einlagen bei größtmöglicher Schonung dieser stückigen Einlagen zu entwickeln.

Diese Aufgabe wird hinsichtlich des Verfahrens durch folgende, nacheinander durchzuführende Verfahrensschritte gelöst:
a) die mit einer Temperatur von 75° bis 120° C hergestellte Soße wird über ein Kühlsystem gepumpt und hierbei auf eine Temperatur von ca. 50° bis 55° C gekühlt;
b) die so vorgekühlte Soße wird in einen unter Vakuum gesetzten Kühlbehälter gepumpt, den sie unter Schwerkraft teilweise über erzwungene Umlenkungen und teilweise im freien Fall durchläuft, wobei die Soße durch Verdampfen von Wasser auf eine Temperatur von ca. 3° C bis 17° C gekühlt wird;
c) die sich auf dem Behälterboden ansammelnde gekühlte Soße wird chargenweise alle 5 bis 10 Minuten in einen vorevakuierten Schleusentank abgelassen;
d) der Schleusentank wird dann mit Sterilluft beaufschlagt und unter ca. 1 bar Überdruck gesetzt, der die Soße in den Ansaugbereich einer Pumpe drückt, die die Soße zu ihrer weiteren Verarbeitung pumpt.

Hinsichtlich der Vorrichtung wird die der Erfindung zugrundeliegende Aufgabe durch folgende Merkmale gelöst:
a) ein Röhrenkühler für die Vorkühlung der Soße;
b) ein dem Röhrenkühler nachgeordneter Kühlturm mit einem oberen Soßeneinlaß, einem in seinem Boden vorgesehenen Entleerventil und eingebauten Leitblechen;
c) eine den Kühlturm unter Vakuum setzende Anlage;
d) ein an das Entleerventil angeschlossener Schleusentank mit einem ventilgesteuerten Anschluß für seine Vorevakuierung, einem ventilgesteuerten Anschluß für Sterilluft und einem angeschlossenen Saugstutzen einer nachgeschalteten Produktpumpe.

Das erfindungsgemäße Verfahren basiert somit auf einer Verdampfung von Wasser unter Vakuum bis 2 mbar absolut und einer hiermit verbundenen Kühlung der Soßen im quasi kontinuierlichen Betrieb. Dabei ist der Kühlbehälter als Entspannungsgefäß ausgelegt, wobei sich die Vakuumhöhe nach der gewünschten Produkttemperatur richtet und geregelt wird. Es ist zweckmäßig, die Soßenzufuhr in den Kühlbehälter während dessen chargenweise Entleerung zu unterbrechen, weshalb eingangs von einem quasi kontinuierlichen Betrieb gesprochen wurde.

Zur Vorevakuierung des Schleusentankes ist es zweckmäßig, wenn dieser über eine ventilgesteuerte Verbindungsleitung an dem Kühlbehälter angeschlossen ist, wobei die Verbindungsleitung gegenüber dem Entleerventil des Kühlturms einen Bypass darstellt.

Die in den Kühlbehälter gepumpte Soße gleitet über Leitbleche sowie teilweise im freien Fall nach unten, wobei die Leitbleche entsprechend der Soßenviskosität vorzugsweise mit unterschiedlicher Steilheit eingestellt werden. Die Kühlung der Soße geschieht durch Verdampfen von Wasser während des Ablaufs über die Leitbleche sowie während des Abtropfens im freien Fall und am Boden des Kühlturms. Die gekühlte Soße wird zunächst am Behälterboden in einer Menge von 50 bis 100 kg gesammelt. Nach ca. 5 bis 10 Minuten wird diese Soßenzufuhr für etwa 30 Sekunden unterbrochen; die angesammelte, gekühlte Soße wird dann über ein großdimensioniertes Entleerventil in den vorevakuierten Schleusentank abgelassen. Nach dem Schließen des Entleerventils wird die Soßenzufuhr in den Kühlbehälter wieder aufgenommen.

Vor jeder Befüllung des Schleusentanks wird dieser mit Sterilluft beaufschlagt und unter ca. 1 Dar Überdruck gesetzt. Hierdurch wird die dickflüssige Soße in den Saugstutzen der nachgeschalteten produktpumpe gepreßt und kann dann z. B. mit Hilfe einer Kreiskolbenpumpe zur weiteren Verarbeitung gepumpt werden.

Die aus dem Kühlturm abgelassene Soße wird direkt in den Schleusentank bzw. den Ansaugbereich der nachgeschalteten Produktpumpe gedrückt. Um Querschnittsverengungen im Saugbereich dieser Produktpumpe zu vermeiden, ist ihr ein Absperrventil nachgeschaltet.

Weitere Merkmale der Erfindung sind Gegenstand der Unteransprüche und werden mit weiteren Vorteilen der Erfindung anhand eines Ausführungsbeispieles näher erläutert.

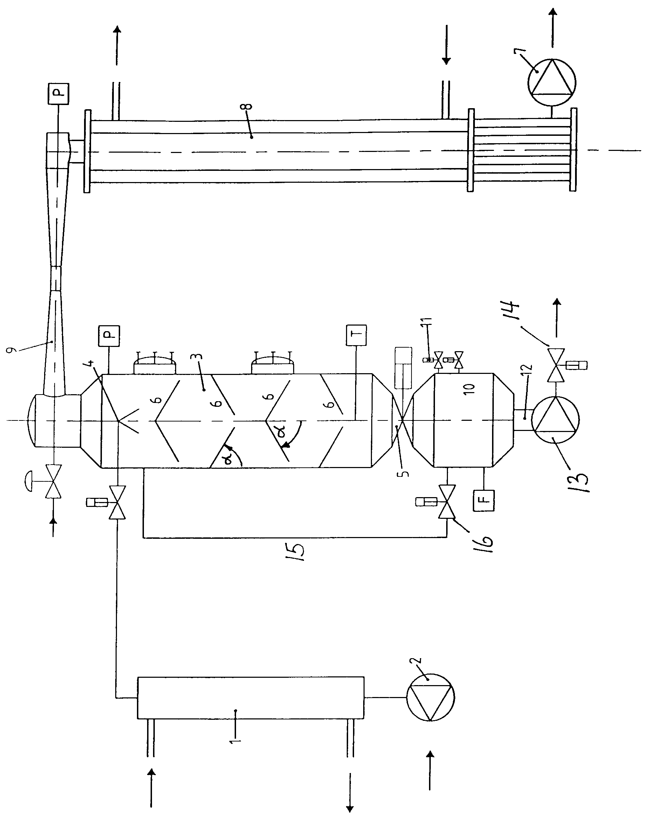

In der Zeichnung ist eine Soßen-Kühlvorrichtung schematisch dargestellt.

Die dargestellte Vorrichtung besteht aus einem Röhrenkühler 1, dem eine Pumpe 2 vorgeschaltet und ein Kühlturm 3 nachgeschaltet sind. Der Kühlturm 3 weist einen oberen Soßeneinlaß 4, ein in seinem Boden vorgesehenes, großdimensioniertes Soßen-Entleerventil 5 sowie eingebaute Leitbleche 6 auf. Letztere sind in ihrem Anstellwinkel α verstellbar.

An den Kühlturm 3 ist eine ihn unter Vakuum setzende Anlage angeschlossen, die aus einer Wasserringpumpe 7 mit Kondensator 8 und vorgeschalteter Dampfstrahlpumpe 9 besteht.

An das Entleerventil 5 des Kühlturms 3 ist ein Schleusentank 10 angeschlossen, der mit einem ventilgesteuerten Anschluß 11 für Sterilluft ausgerüstet ist und an seinem unteren Ende einen angeschlossenen Saugstutzen 12 einer nachgeschalteten Produktpumpe 13 aufweist, der ein Absperrventil 14 nachgeschaltet ist.

Vor jeder Befüllung wird der Schleusentank 10 einer Vorevakuierung unterworfen. Hierfür ist der Schleusentank 10 über eine Verbindungsleitung 15 unter Umgehung des Entleerventils 5 an den Kühlturm 3 angeschlossen.

Nach dem Entleeren des Schleusentanks 10 durch die Produktpumpe 13 wird das ihr nachgeschaltete Ventil 14 geschlossen; ein in die Verbindungsleitung 15 geschaltetes Absperrventil 16 wird geöffnet; durch die hierdurch entstehende Verbindung zwischen Schleusentank 10 und Kühlturm 3 wird nun der Schleusentank 10 ebenfalls evakuiert. Nach ca. 30 Sekunden wird das Entleerventil 5 geöffnet und die im Kühlturm 3 befindliche Soße in den Schleusentank 10 abgelassen. Nach Abschluß des Entleerungsvorgangs werden das Entleerventil 5 und das Absperrventil 16 wieder geschlossen. Der Kühlprozeß im Kühlturm 3 wird fortgesetzt. Der Schleusentank 10 wird durch Öffnen des Ventils 11 mit Sterilluft beaufschlagt; nach Öffnung des Ventils 14 wird die Soße über die Produktpumpe 13 zur Verbrauchs- oder Lagerstation gefördert. Bei diesem Verfahrensablauf wird die aus dem Kühlturm 3 abgelassene Soße direkt in den Schleusentank 10 bzw. den Ansaugbereich der nachgeschalteten Produktpumpe 13 gedrückt. Um Querschnittsverengungen im Saugbereich der Produktpumpe 13 zu vermeiden, ist das Absperrventil 14 hinter der Produktpumpe 13 vorgesehen. In der Zeichnung bezeichnen F einen Füllstandssensor, P Drucksensoren und T einen Temperatursensor.

## Patentansprüche

1. Verfahren zur Kühlung dickflüssiger Soßen mit stückigen Einlagen, mit folgenden, nacheinander durchzuführenden Verfahrensschritten:
a) die mit einer Temperatur von 75° bis 120° C hergestellte Soße wird über ein Kühlsystem gepumpt und hierbei auf eine Temperatur von ca. 50° bis 55° C gekühlt;
b) die so vorgekühlte Soße wird in einen unter Vakuum gesetzten Kühlbehälter gepumpt, den sie unter Schwerkraft teilweise über erzwungene Umlenkungen und teilweise im freien Fall durchläuft, wobei die Soße durch Verdampfen von Wasser auf eine Temperatur von ca. 3° C bis 17° C gekühlt wird;
c) die sich auf dem Behälterboden ansammelnde gekühlte Soße wird chargenweise alle 5 bis 10 Minuten in einen vorevakuierten Schleusentank abgelassen;
d) der Schleusentank wird dann mit Sterilluft beaufschlagt und unter ca. 1 bar Überdruck gesetzt, der die Soße in den Ansaugbereich einer Pumpe drückt, die die Soße zu ihrer weiteren Verarbeitung pumpt.

2. Verfahren nach Anspruch 1, **gekennzeichnet durch** eine Regelung der Vakuumhöhe im Kühlbehälter entsprechend der gewünschten Produkttemperatur.

3. Verfahren nach Anspruch 1 oder 2, **dadurch gekennzeichnet,** daß die Soßenzufuhr in den Kühlbehälter während dessen chargenweiser Entleerung unterbrochen wird.

4. Verfahren nach Anspruch 1, 2 oder 3, **dadurch gekennzeichnet,** daß der Schleusentank jeweils nach seiner Entleerung zu seiner Vorevakuierung an den Kühlbehälter angeschlossen wird.

5. Vorrichtung zur Kühlung dickflüssiger Soßen mit stückigen Einlagen, **gekennzeichnet durch** folgende Merkmale:
a) ein Röhrenkühler (1) für die Vorkühlung der Soße;
b) ein dem Röhrenkühler (1) nachgeordneter Kühlturm (3) mit einem oberen Soßeneinlaß (4), einem in seinem Boden vorgesehenen Entleerventil (5) und eingebauten Leitblechen (6);
c) eine den Kühlturm (3) unter Vakuum setzende Anlage (7, 8, 9);
d) ein an das Entleerventil (5) angeschlossener Schleusentank (10) mit einem ventilgesteuerten Anschluß (15, 16) für seine Vorevakuierung, einem ventilgesteuerten Anschluß (11) für Sterilluft und einem angeschlossenen Saugstutzen (12) einer nachgeschalteten Produktpumpe (13).

6. Vorrichtung nach Anspruch 5, **dadurch gekennzeichnet,** daß die im Kühlturm (3) angeordneten Leitbleche (6) hinsichtlich ihrer Neigung (α) verstellbar sind.

7. Vorrichtung nach Anspruch 5 oder 6, **dadurch gekennzeichnet,** daß die genannte Vakuumanlage aus einer Wasserringpumpe (7) mit Kondensator (8) und vorgeschalteter Dampfstrahlpumpe (9) besteht.

8. Vorrichtung nach Anspruch 5, 6 oder 7, **dadurch gekennzeichnet,** daß der für die Vorevakuierung des Schleusentanks (10) vorgesehene Anschluß eine den Schleusentank (10) mit dem Kühltank (3) verbindende Verbindungsleitung (15) mit einem Absperrventil (16) ist.
